# EUROPÄISCHE PATENTSCHRIFT

(11) **EP 4 287 497 B1**
(45) Veröffentlichungstag und Bekanntmachung des Hinweises auf die Patenterteilung: **13.05.2026**
(21) Anmeldenummer: 23174275.0
(22) Anmeldetag: 19.05.2023
(51) Int. Cl.: H02P 21/05, H02P 29/50

(54) **VERFAHREN ZU EINEM GERÄUSCHARMEN BETRIEB EINER ELEKTROMOTORVORRICHTUNG, EINE ELEKTROMOTORVORRICHTUNG UND EINE KRAFTWÄRMEMASCHINE**
METHOD FOR THE SILENT OPERATION OF AN ELECTRIC MOTOR DEVICE, AN ELECTRIC MOTOR DEVICE AND A HEAT ENGINE
PROCÉDÉ DE FONCTIONNEMENT SILENCIEUX D'UN DISPOSITIF DE MOTEUR ÉLECTRIQUE, DISPOSITIF DE MOTEUR ÉLECTRIQUE ET MOTEUR THERMIQUE

(30) Priorität: 31.05.2022 DE 102022205454
(43) Veröffentlichungstag der Anmeldung: 06.12.2023
(73) Patentinhaber: Robert Bosch GmbH, 70442 Stuttgart (DE)
(72) Erfinder: Gaenzle, David, 70771 Leinfelden-Echterdingen (DE); Manderla, Maximilian, 61440 Oberursel (DE); Huebel, Johannes, 70839 Gerlingen (DE); Thielecke, Anja, 71229 Leonberg (DE); Herbst, Juergen, 72663 Grossbettlingen (DE)

(56) Entgegenhaltungen:
- EP-A1- 2 012 425
- EP-A1- 3 605 829
- WO-A1-2021/132606
- WO-A1-2021/171679

## Beschreibung

### Stand der Technik

Es ist bereits ein Verfahren zu einem geräuscharmen Betrieb einer Elektromotorvorrichtung, insbesondere eines Kompressors, vorgeschlagen worden, in welchem in zumindest einem Verfahrensschritt ein von einer Regelgröße abhängiges Stellsignal an einen Elektromotor der Elektromotorvorrichtung übersandt wird. Siehe hierzu auch EP2012425 A1.

### Offenbarung der Erfindung

Die Erfindung geht aus von einem Verfahren nach Anspruch 1 zu einem geräuscharmen Betrieb einer Elektromotorvorrichtung, insbesondere eines Kompressors, wobei in zumindest einem Verfahrensschritt des Verfahrens ein von einer Regelgröße abhängiges Stellsignal an einen Elektromotor der Elektromotorvorrichtung übersandt wird.

Es wird vorgeschlagen, dass das Stellsignal in Abhängigkeit von einer Harmonikregelung der Regelgröße und in Abhängigkeit von einer Stabilisierungsregelung der Regelgröße erstellt wird. Das Verfahren umfasst vorzugsweise eine Basisregelung, welche zu einem Einstellen eines Betriebspunkts der Elektromotorvorrichtung vorgesehen ist. Die Harmonikregelung und die Stabilisierungsregelung werden bevorzugt zusätzlich zu der Basisregelung durchgeführt. Die Elektromotorvorrichtung umfasst vorzugsweise eine Regeleinheit, welche die Basisregelung, die Harmonikregelung und/oder die Stabilisierungsregelung durchführt. Die Basisregelung ist vorzugsweise eine Vektorregelung, besonders bevorzugt eine feldorientierte Regelung, alternativ eine direkte Selbstregelung, eine Raumzeigermodulation oder eine modellprädikative Regelung.

Der Elektromotor umfasst vorzugsweise einen Stator, einen Rotor und eine an dem Rotor befestigte Antriebswelle zu einer Drehmomentübertragung auf eine an der Antriebswelle angeordnete Last. Die Last ist beispielsweise ein Förderelement zu einem Fördern eines Fluids und/oder ein Verdichtungselement zu einem Verdichten des Fluids. Das Fluid ist beispielsweise ein Wärmeträger, insbesondere ein Kühlmittel, bevorzugt ein Kältemittel. Alternativ ist der Elektromotor Teil eines Traktionsantriebs mit Getriebe oder weist eine andere Last auf, bei welcher eine Lastwelligkeit auftritt. Der Betriebspunkt ist vorzugsweise durch das über die Antriebswelle bereitgestellte Drehmoment und/oder eine Drehzahl des Rotors festgelegt. Die Regelgröße ist vorzugsweise die Drehzahl des Rotors, das über die Antriebswelle bereitgestellte Drehmoment oder eine dazu äquivalente Größe oder proportionale Größe, beispielsweise eine Frequenz des Rotors, eine auf die Last übertragene Kraft oder dergleichen.

Die Stabilisierungsregelung ist vorzugsweise dazu vorgesehen, bei einem durch die Basisregelung vorgegebenen Betriebspunkt eine Schwankung der Regelgröße um den Betriebspunkt gegenüber einer Schwankung bei bloßer Verwendung der Basisregelung zu verringern. Die Stabilisierungsregelung und/oder die Harmonikregelung sind vorzugsweise dazu vorgesehen, Schwankungen der Regelgröße zu verringern, die durch eine sich verändernde, insbesondere sich periodisch ändernde, Last verursacht werden. Vorzugsweise ergänzen sich die Harmonikregelung und die Stabilisierungsregelung gegenseitig. Bevorzugt umfasst das Stellsignal einen Signalanteil, der durch die Basisregelung festgelegt wird, einen Signalanteil, der durch die Harmonikregelung festgelegt wird, und einen Signalanteil, der durch die Stabilisierungsregelung festgelegt wird. Die Stabilisierungsregelung kann dazu vorgesehen sein, auf eine Änderung der Last, insbesondere schneller als die Basisregelung, zu reagieren oder ein im Vorfeld des Verfahrens ermitteltes Kompensationssignal auf das Stellsignal aufzuaddieren, um einem antizipierten Verlauf der Last entgegenzuwirken.

Die Harmonikregelung ist vorzugsweise dazu vorgesehen, zumindest einer Schwingung des Elektromotors bei einer festgelegten Frequenz, insbesondere einer Oberschwingung einer Frequenz, welche der Drehzahl des Betriebspunkts entspricht, entgegenzuwirken oder diese Schwingung zu verstärken. Die Regeleinheit umfasst vorzugsweise zumindest einen Harmonikregler, welche die Harmonikregelung ausführt. Optional umfasst die Regeleinheit mehrere Harmonikregler, welche vorzugsweise für ein Einwirken auf Schwingungen des Elektromotors bei unterschiedlichen Frequenzen und/oder Oberschwingungen vorgesehen sind. Die Stabilisierungsregelung wirkt vorzugsweise gleichzeitig auf mehrere Schwingungen, d.h. auf eine Schwankung mehreren Schwingungen umfasst.

Durch die erfindungsgemäße Ausgestaltung können Vibrationen und Geräusche der Elektromotorvorrichtung vorteilhaft stark gedämpft werden. Insbesondere können Vibrationen und Geräusche vorteilhaft effektiv reduziert werden. Ferner kann das Verfahren vorteilhaft auch mit geringer Rechenleistung der Regeleinheit durchgeführt werden. Insbesondere kann eine vorteilhaft große Flexibilität erreicht werden, um auf verschiedene Situationen und/oder Bedarfe zu reagieren. Darüber hinaus kann das Verfahren, insbesondere im Vergleich mit einer reinen Harmonikregelung, mit vorteilhaft wenigen Reglern durchgeführt werden. Ferner können Ansteuerparameter des Elektromotors mittels der Harmonikregelung gezielt ermittelt werden. Beispielsweise kann bei einer Regeleinheit mit einer gegebenen Rechenleistung, die Anzahl an verwendeten Harmonikreglern angepasst werden, um mit der verfügbaren Rechenleistung eine maximale Geräuschoptimierung zu erreichen. Insbesondere kann eine vorteilhaft hohe Flexibilität und Stabilität mit den Harmonikreglern für die relevantesten Frequenzen und/oder Oberwellen erreicht werden, da beispielsweise alle Effekte bis zum Stellsignal korrigiert werden können und alle weiteren Frequenzen und/oder Oberschwingungen zusammengefasst durch die Stabilisierungsregelung korrigiert werden können. Alternativ kann eine vorteilhaft kompakte und/oder kostengünstige Regeleinheit verwendet werden, welche nur so viel Rechenleistung aufweist, dass die Stabilisierungsregelung und genau ein Harmonikregler implementiert werden können, wobei der Harmonikregler die unbeständigste, insbesondere temperaturempfindlichste und/oder alterungsempfindlichste, Frequenz oder Oberschwingung optimiert.

Weiter wird vorgeschlagen, dass die Stabilisierungsregelung eine betriebspunktabhängige Vorsteuerung umfasst, in Abhängigkeit derer das Stellsignal erstellt wird. Die Regeleinheit addiert im Zuge der Vorsteuerung vorzugsweise das Kompensationssignal auf das Stellsignal auf. Das Kompensationssignal wird vorzugsweise im Vorfeld des Verfahrens ermittelt und in einem Speicher der Regeleinheit hinterlegt. Beispielsweise wird ein Verlauf der Last ermittelt, beispielsweise gemessen oder simuliert, und das Kompensationssignal in Abhängigkeit davon so gewählt, dass sich für diesen Verlauf der Last ein konstanter Wert der Regelgröße ergibt. Alternativ wird ein von der Elektromotorvorrichtung erzeugter Geräuschpegel und/oder eine Vibrationsamplitude erfasst, wobei das Kompensationssignal so gewählt wird, dass der Geräuschpegel und/oder die Vibrationsamplitude möglichst klein wird. Vorzugsweise ist in dem Speicher der Regeleinheit für zumindest zwei verschiedene Betriebspunkte der Elektromotorvorrichtung zumindest je ein Kompensationssignal hinterlegt. Vorzugsweise wählt die Regeleinheit das Kompensationssignal in Abhängigkeit von dem zu haltenden Betriebspunkt aus. Vorzugsweise misst oder schätzt die Regeleinheit eine mechanische Winkellage des Rotors relativ zu dem Stator, um das Kompensationssignal mit einer Drehbewegung des Rotors, insbesondere mit einem Takt der Last, zu synchronisieren. Durch die erfindungsgemäße Ausgestaltung kann das Verfahren vorteilhaft flexibel auf unterschiedliche Anwendungen und/oder Situationen angepasst werden. Insbesondere kann durch die Vorsteuerung auf vorteilhaft viele unterschiedliche Ursachen, welche zu einer Schwankung der Regelgröße führen, reagiert werden. Insbesondere ist eine Einsatzmöglichkeit der Vorsteuerung vorteilhaft nicht auf die eine Schwankung der Drehzahl und/oder der Last beschränkt. Ferner kann bereits vorteilhaft früh in dem Entwicklungsprozess der Elektromotorvorrichtung, insbesondere bereits vor einer Geräuschmessung, ein vorteilhaft guter akustischer Zustand der Elektromotorvorrichtung erreicht werden.

Ferner wird vorgeschlagen, dass ein Beitrag der Stabilisierungsregelung zu dem Stellsignal abhängig von einem Istwert des Stellsignals ist. Das Stellsignal ist vorzugsweise ein von einer Leistungselektronik der Elektromotorvorrichtung bereitgestellter elektrischer Strom zu einem Antrieb des Elektromotors. Vorzugsweise greift die Regeleinheit den Istwert des Stellsignals an oder nach der Leistungselektronik ab. Die Stabilisierungsregelung umfasst vorzugsweise ein Stabilisierungsregelglied stromaufwärts der Basisregelung, welches abhängig von dem Istwert des Stellsignals einen Wert ausgibt, der von der Basisregelung als Sollwert verwendet wird. Das Stabilisierungsregelglied verarbeitet bevorzugt eine Regeldifferenz aus dem Istwert des Stellsignals und einem durch den vorgegebenen Betriebspunkt vorgegebenen Sollwert des Stellsignals. Die Regeleinheit umfasst vorzugsweise einen Signalpfad des Stellsignals von einer Signalquelle der Regeleinheit für das Stellsignal zu einer Stelleinheit, insbesondere der Leistungselektronik, des Elektromotors zu einem Einstellen des Betriebspunkts des Elektromotors. Der Term "stromaufwärts" bezeichnet vorzugsweise eine Richtung entlang des Signalpfads ausgehend von der Stelleinheit zu der Signalquelle. Durch die erfindungsgemäße Ausgestaltung kann eine Welligkeit des Stellsignals vorteilhaft klein gehalten werden. Insbesondere kann eine Geräusch- und/oder Vibrationsentwicklung aufgrund einer Welligkeit des Stellsignals vorteilhaft klein gehalten werden.

Weiter wird vorgeschlagen, dass die Harmonikregelung und die Stabilisierungsregelung stromaufwärts einer Basisregelung zu einem Einstellen eines Betriebspunkts der Regelgröße durchgeführt werden. Der zumindest eine Harmonikregler und/oder das Stabilisierungsregelglied der Stabilisierungsregelung gibt vorzugsweise einen Wert aus, der von einem Basisregelglied der Basisregelung verarbeitet wird. Vorzugsweise wird der Signalanteil der Harmonikregelung und der Signalanteil der Stabilisierungsregelung stromaufwärts der Basisregelung zusammengeführt, insbesondere aufaddiert. Bevorzugt wird eine von dem Basisregelglied zu kompensierende Regeldifferenz um den Signalanteil der Stabilisierungsregelung und/oder um den Signalanteil der Harmonikregelung reduziert. Vorzugsweise wird ein Ausgabewert des Basisregelglieds mit dem Signalanteil der Harmonikregelung und/oder der Stabilisierungsregelung beaufschlagt. Durch die erfindungsgemäße Ausgestaltung kann ein Risiko eines Konflikts zwischen den unterschiedlichen Regelungen vorteilhaft gering gehalten werden.

Des Weiteren wird vorgeschlagen, dass in zumindest einem Verfahrensschritt des Verfahrens zumindest ein Teil eines Beitrags der Stabilisierungsregelung zu dem Stellsignal mittels der Harmonikregelung ermittelt wird. Vorzugsweise wird das Kompensationssignal oder eine Ergänzung zu dem Kompensationssignal mittels der Harmonikregelung ermittelt, wobei das Kompensationssignal und die Ergänzung gemeinsam oder separat voneinander in dem Speicher der Regeleinheit hinterlegt werden können. Für die Ermittlung des Kompensationssignals oder die Ergänzungen können optional zusätzliche externe Harmonikregler temporär, insbesondere nur für die Dauer der Ermittlung, an der Regeleinheit angeschlossen werden. Vorzugsweise führt die Regeleinheit die Harmonikregelung mehrfach durch, insbesondere unter verschiedenen Bedingungen, und hinterlegt einen Mittelwert der mittels der Harmonikregelung ermittelten Signalanteile als Kompensationssignal oder als Ergänzung zu dem Kompensationssignal. Alternativ zu dem Mittelwert ermittelt die Regeleinheit einen Minimalwert, einen Maximalwert, einen Median, den am häufigsten angenommenen Wert der Signalanteile der Harmonikregelung oder dergleichen, um einen wahrscheinlichen Wert des Signalanteils der Harmonikregelung zumindest teilweise vorwegzunehmen. Durch die erfindungsgemäße Ausgestaltung kann ein geräuscharmer Betrieb der Elektromotorvorrichtung mit vorteilhaft wenigen während des Betriebs aktiven Harmonikreglern erreicht werden. Insbesondere kann das Kompensationssignal vorteilhaft präzise auf die Elektromotorvorrichtung abgestimmt werden. Ferner kann eine notwendige Regelungsbandbreite der Harmonikregelung vorteilhaft gering gehalten werden

Ferner wird vorgeschlagen, dass die Harmonikregelung in zumindest einem Verfahrensschritt des Verfahrens eine Schwingungsamplitude zumindest einer von der Regelgröße abhängigen Schwingungsfrequenz der Elektromotorvorrichtung anhebt. Durch die erfindungsgemäße Ausgestaltung kann ein von der Elektromotorvorrichtung erzeugtes Geräusch vorteilhaft an eine Umgebung und/oder einen Benutzer angepasst werden, um als weniger störend wahrgenommen zu werden.

Weiter wird vorgeschlagen, dass in zumindest einem Verfahrensschritt des Verfahrens eine Schwingungsamplitude und/oder Schwingungsfrequenz der Elektromotorvorrichtung erfasst wird. Vorzugsweise umfasst die Elektromotorvorrichtung zumindest einen Noise, Vibration, Harshness-Sensor (NVH-Sensor), welcher die Schwingungsamplitude und/oder Schwingungsfrequenz erfasst. Beispielsweise wird die Schwingungsamplitude und/oder Schwingungsfrequenz mittels eines Mikrofons, mittels eines Beschleunigungssensors, mittels eines Kraftmessers, mittels einer Wägezelle oder dergleichen erfasst. Die Regeleinheit führt die Schwingungsamplitude und/oder Schwingungsfrequenz vorzugsweise der Stabilisierungsregelung, der Harmonikregelung oder einer optionalen weiteren Regelung zu, so dass diese die erfasste Schwingungsamplitude minimieren. Durch die erfindungsgemäße Ausgestaltung kann eine Effektivität der Regelung weiter gesteigert werden. Insbesondere kann ein Risiko einer Fehlregelung, welche zu einem unerwünschten Geräuschpegel führt, vorteilhaft gering gehalten werden. Insbesondere kann vorteilhaft eine alterungs- und/oder temperaturbedingte Änderung eines Schwingverhaltens der Elektromotorvorrichtung vorteilhaft zuverlässig kompensiert werden.

Darüber hinaus wird eine Elektromotorvorrichtung, insbesondere ein Kompressor, mit zumindest einem Elektromotor und mit zumindest einer Regeleinheit zu einer Durchführung eines erfindungsgemäßen Verfahrens vorgeschlagen. Die Regeleinheit umfasst vorzugsweise zumindest eine Steuerelektronik. Die Steuerelektronik umfasst vorzugsweise eine Prozessoreinheit, den Speicher sowie ein in dem Speicher gespeichertes Betriebsprogramm. Die Regeleinheit ist vorzugsweise speziell dazu ausgelegt und/oder programmiert, ein erfindungsgemäßes Verfahren auszuführen. Die Regeleinheit umfasst vorzugsweise das zumindest eine Stabilisierungsregelglied. Die Regeleinheit umfasst vorzugsweise das zumindest eine Basisregelglied. Die Regeleinheit umfasst vorzugsweise den zumindest einen Harmonikregler. Der Harmonikregler umfasst beispielsweise ein frequenzabhängiges Integrationsglied (I-Regler). Die Regeleinheit umfasst optional den zumindest einen NVH-Sensor. Die Elektromotorvorrichtung umfasst vorzugsweise eine Leistungselektronik zu einer Versorgung des Elektromotors mit elektrischem Strom. Das Stellsignal ist insbesondere dazu vorgesehen, die Leistungselektronik einzustellen. Der Elektromotor ist vorzugsweise ein bürstenloser Gleichstrommotor. Die Elektromotorvorrichtung ist beispielsweise als Rollkolbenkompressor, als Scrollkompressor, als Kolbenkompressor oder dergleichen ausgebildet. Durch die erfindungsgemäße Ausgestaltung kann eine vorteilhaft geräuscharme Elektromotorvorrichtung bereitgestellt werden.

Ferner wird eine Kraftwärmemaschine, insbesondere eine Wärmepumpenheizung, mit zumindest einem Kältemittelkreislauf und mit zumindest einer in den Kältemittelkreislauf eingebundenen erfindungsgemäßen Elektromotorvorrichtung, insbesondere einem Kompressor, vorgeschlagen. Die Kraftwärmemaschine kann als Wärmepumpe oder als Kältemaschine ausgebildet sein. Optional umfasst die Kraftwärmemaschine einen Betriebszustand, in welchem sie als Wärmepumpe arbeitet, und einen Betriebszustand, in welchem sie als Kältemaschine arbeitet.

Die Kraftwärmemaschine kann als Kompressionskraftwärmemaschine oder als Absorptionskraftwärmemaschine ausgebildet sein. Besonders bevorzugt ist die Kraftwärmemaschine als Luft-Wasser-Wärmepumpe, insbesondere zu Beheizung eines Gebäudes, ausgebildet. Die Elektromotorvorrichtung ist vorzugsweise dazu vorgesehen, ein Kältemittel in dem Kältemittelkreislauf umzuwälzen, insbesondere zu verdichten. Durch die erfindungsgemäße Ausgestaltung kann eine vorteilhaft geräuscharme Kraftwärmemaschine bereitgestellt werden.

Das erfindungsgemäße Verfahren, die erfindungsgemäße Elektromotorvorrichtung und/oder die erfindungsgemäße Kraftwärmemaschine sollen/soll hierbei nicht auf die oben beschriebene Anwendung und Ausführungsform beschränkt sein. Insbesondere können/kann das erfindungsgemäße Verfahren, die erfindungsgemäße Elektromotorvorrichtung und/oder die erfindungsgemäße Kraftwärmemaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Kraftwärmemaschine mit einer erfindungsgemäßen Elektromotorvorrichtung,
- Fig. 2: eine schematisches Blockdiagramm eines erfindungsgemäßen Verfahrens,
- Fig. 3: ein schematisches Blockdiagramm einer alternativen Ausgestaltung eines erfindungsgemäßen Verfahrens bei Verwendung eines NVH-Sensors,
- Fig. 4: ein schematisches Blockdiagramm einer weiteren alternativen Ausgestaltung eines erfindungsgemäßen Verfahrens bei Verwendung eines NVH-Sensors,
- Fig. 5: ein schematisches Blockdiagramm einer alternativen Ausgestaltung eines erfindungsgemäßen Verfahrens mit mehreren Harmonikreglern,
- Fig. 6: ein schematisches Blockdiagramm einer alternativen Ausgestaltung des erfindungsgemäßen Verfahrens mit einer Rückkopplung einer geschätzten Drehzahl der Elektromotorvorrichtung und
- Fig. 7: ein schematisches Blockdiagramm einer alternativen Ausgestaltung des erfindungsgemäßen Verfahrens mit einer Rückkopplung einer erfassten Drehzahl der Elektromotorvorrichtung.

### Beschreibung der Ausführungsbeispiele

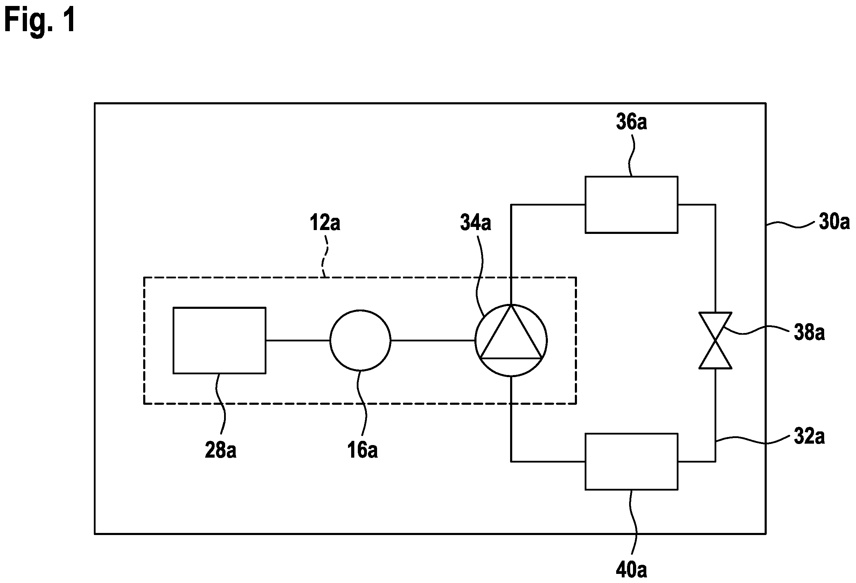

Figur 1 zeigt eine Kraftwärmemaschine 30a. Die Kraftwärmemaschine 30a ist insbesondere als Wärmepumpenheizung ausgebildet. Die Kraftwärmemaschine 30a umfasst zumindest einen Kältemittelkreislauf 32a. Die Kraftwärmemaschine 30a umfasst zumindest eine Elektromotorvorrichtung 12a. Die Elektromotorvorrichtung 12a ist in den Kältemittelkreislauf 32a eingebunden. Die Kraftwärmemaschine 30a ist hier beispielhaft als Kompressionswärmepumpe dargestellt. Die Elektromotorvorrichtung 12a ist insbesondere ein Kompressor. Der Kältemittelkreislauf 32a umfasst vorzugsweise eine Kompressionseinheit 34a der Elektromotorvorrichtung 12a, einen Kondensator 36a, ein Entspannungselement 38a und einen Verdampfer 40a, zu einer Übertragung von Wärme von einem Wärmereservoir an dem Verdampfer 40a, insbesondere Umgebungsluft, auf einen Wärmeträger an dem Kondensator 36a, insbesondere Heizwasser und/oder Leitungswasser.

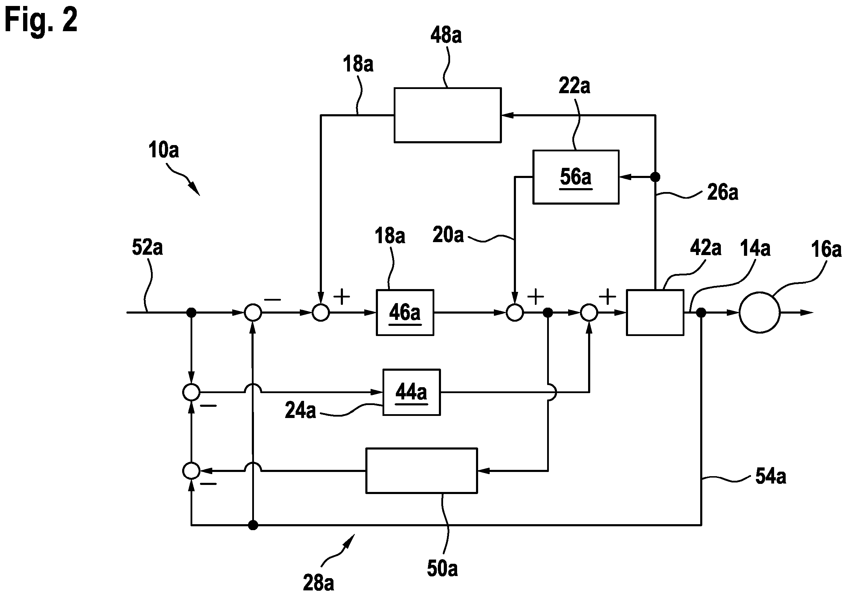

Die Kompressionseinheit 34a ist vorzugsweise zu einem Umwälzen eines Kältemittels in dem Kältemittelkreislauf 32a vorgesehen. Die Elektromotorvorrichtung 12a umfasst zumindest einem Elektromotor 16a. Der Elektromotor 16a ist vorzugsweise zu einem Antrieb der Kompressionseinheit 34a vorgesehen. Die Elektromotorvorrichtung 12a umfasst eine Regeleinheit 28a zu einer Durchführung eines in Figur 2 näher erläuterten Verfahrens 10a. Die Regeleinheit 28a ist vorzugsweise dazu vorgesehen, einen Betriebspunkt des Elektromotors 16a einzustellen und zu halten.

Figur 2 zeigt ein Blockdiagramm des Verfahrens 10a. Das Verfahren 10a ist zu einem geräuscharmen Betrieb der Elektromotorvorrichtung 12a vorgesehen. In zumindest einem Verfahrensschritt des Verfahrens 10a wird ein von einer Regelgröße abhängiges Stellsignal 14a an den Elektromotor 16a der Elektromotorvorrichtung 12a übersandt. Die Regelgröße ist vorzugsweise eine Drehzahl des Elektromotors 16a. Das Stellsignal 14a ist vorzugsweise ein elektrischer Strom zu einem Antrieb des Elektromotors 16a. Der elektrische Strom wird bevorzugt von einer Leistungselektronik 42a der Elektromotorvorrichtung 12a eingestellt.

Das Stellsignal 14a wird vorzugsweise in Abhängigkeit von einer Basisregelung 24a erstellt. Die Basisregelung 24a ist beispielsweise eine feldorientierte Regelung. Die Regeleinheit 28a umfasst vorzugsweise zumindest ein Basisregelglied 44a zu einer Ermittlung eines Signalanteils der Basisregelung 24a an dem Stellsignal 14a. Das Basisregelglied 44a verarbeitet vorzugsweise eine Regeldifferenz aus einem Strom-Sollwert 52a des elektrischen Stroms und einem Strom-Istwert 54a des von der Leistungselektronik 42a für den Elektromotor 16a bereitgestellten elektrischen Stroms. Der Strom-Sollwert 52a wird von der Regeleinheit 28a anhand eines Sollwerts des Betriebspunkts ausgewählt. Der Sollwert des Betriebspunkts wird beispielsweise von einer übergeordneten Steueranlage der Kraftwärmemaschine 30a vorgegeben. Der Betriebspunkt umfasst vorzugsweise die Drehzahl des Elektromotors 16a und das von dem Elektromotor 16a bereitgestellte Drehmoment.

Das Stellsignal 14a wird in Abhängigkeit von einer Harmonikregelung 18a der Regelgröße und in Abhängigkeit von einer Stabilisierungsregelung 20a der Regelgröße erstellt. Die Regeleinheit 28a umfasst vorzugsweise zumindest einen Harmonikregler 46a zu einer Ermittlung eines Signalanteils der Harmonikregelung 18a an dem Stellsignal 14a. Der Harmonikregler 46a ist dazu vorgesehen, eine einzelne Schwingung, insbesondere eine Oberschwingung einer durch den Betriebspunkt vorgegebenen Frequenz des Elektromotors 16a, welche in dem Strom-Istwert 54a enthalten ist, zu dämpfen oder zu verstärken. Mechanische Schwingungen des Elektromotors 16a, welche sich in dem Strom-Istwert 54a niederschlagen, können beispielsweise durch eine sich verändernde Last des Elektromotors 16a hervorgerufen werden. Optional umfasst die Regeleinheit 28a weitere Harmonikregler, um unterschiedliche Schwingungen zu dämpfen oder zu verstärken. Der Übersichtlichkeit halber ist hier nur ein Harmonikregler 46a dargestellt.

Durch ein Dämpfen der zumindest eine Schwingung kann die Regelgröße vorteilhaft konstant und eine Geräuschentwicklung vorteilhaft gering gehalten werden. Zusätzlich oder alternativ hebt die Harmonikregelung 18a eine Schwingungsamplitude zumindest einer von der Regelgröße abhängigen Schwingungsfrequenz der Elektromotorvorrichtung 12a an, um die Geräuschentwicklung der Elektromotorvorrichtung 12a gezielt zu formen.

Die Harmonikregelung 18a umfasst vorzugsweise eine Harmonikvorsteuerung 48a. Die Harmonikvorsteuerung 48a ermittelt vorzugsweise einen Harmonikvorsteuerwert in Abhängigkeit von einem Betriebspunkt-Istwert 26a des Betriebspunkts und/oder einer mechanischen Winkellage eines Rotors des Elektromotors 16a relativ zu einem Stator des Elektromotors 16a. Der Harmonikvorsteuerwert kann beispielsweise ein harmonischer Sollstromverlauf oder ein harmonischer Sollstromripple sein. Die Regeleinheit 28a ermittelt den Betriebspunkt-Istwert 26a vorzugsweise mittels der Leistungselektronik 42a anhand des Strom-Istwerts 54a und/oder der damit verbundenen elektrischen Spannung. Vorzugsweise ermittelt die Regeleinheit 28a die mechanische Winkellage des Rotors des Elektromotors 16a relativ zu dem Stator des Elektromotors 16a anhand des Strom-Istwerts 54a und/oder der damit verbundenen elektrischen Spannung. Alternativ umfasst die Elektromotorvorrichtung 12a einen Encoder, einen Hallsensor oder dergleichen, um die mechanische Winkellage des Rotors zu erfassen. Das Harmonikregler 46a verarbeitet vorzugsweise eine Regeldifferenz aus dem Strom-Sollwert 52a und dem Strom-Istwert 54a, welche insbesondere mit dem Harmonikvorsteuerwert beaufschlagt wird.

Die Regeleinheit 28a umfasst vorzugsweise zumindest ein Stabilisierungsregelglied 56a zu einer Ermittlung eines Signalanteils der Stabilisierungsregelung 20a an dem Stellsignal 14a. Die Stabilisierungsregelung 20a umfasst eine betriebspunktabhängige Vorsteuerung 22a, in Abhängigkeit derer das Stellsignal 14a erstellt wird. Das Stabilisierungsregelglied 56a ist hier beispielhaft, insbesondere ausschließlich, zu der Durchführung der Vorsteuerung 22a vorgesehen. Die Vorsteuerung 22a der Stabilisierungsregelung 56a ist dazu vorgesehen, einen im Vorfeld des Verfahrens 10a ermittelten Lastverlauf mittels eines statischen Kompensationssignals entgegenzuwirken, so dass die Regelgröße bei einem zu dem ermittelten Lasterverlauf gleichen Lastverlauf während des Verfahrens 10a konstant bleibt. Vorzugsweise sind in einem Speicher der Regeleinheit 28a für mehrere Betriebspunkte jeweils ein Kompensationssignal hinterlegt, beispielsweise als Tabellenwerk, als Parametergleichung, als Kennlinienfeld oder dergleichen. Die Vorsteuerung 22a der Stabilisierungsregelung 56a ermittelt das Kompensationssignal vorzugsweise in Abhängigkeit von dem Betriebspunkt-Istwert 26a des Betriebspunkts. Vorzugsweise addiert die Vorsteuerung 22a das Kompensationssignal zu einem Zwischenwert des Stellsignals 14a. Vorzugsweise addiert die Vorsteuerung 22a das Kompensationssignal in Abhängigkeit von der mechanischen Winkellage des Rotors des Elektromotors 16a relativ zu dem Stator des Elektromotors 16a, um das Kompensationssignal mit dem Lastverlauf zu synchronisieren. Der Zwischenwert ist vorzugsweise ein Signalanteil der Harmonikregelung 18a. Die Harmonikregelung 18a und die Stabilisierungsregelung 20a geben insbesondere eine elektrische Spannung als Signalanteil aus, der von der Leistungselektronik 42a zu dem Stellsignal 14a umgesetzt wird.

Die Harmonikregelung 18a und die Stabilisierungsregelung 20a werden stromaufwärts der Basisregelung 24a zu einem Einstellen des Betriebspunkts der Regelgröße durchgeführt. Vorzugsweise wird die Regeldifferenz, die von der Basisregelung 24a verarbeitet wird, um einen Reduktionsfaktor in Abhängigkeit von dem Signalanteil der Harmonikregelung 18a und der Stabilisierungsregelung 20a reduziert. Das Verfahren 10a umfasst vorzugsweise eine Rückrechnung 50a, in welcher der Reduktionsfaktor ermittelt wird. Die Rückrechnung 50a verarbeitet vorzugsweise die bereits aufaddierten Signalanteile der Harmonikregelung 18a und der Stabilisierungsregelung 20a, d.h. den Zwischenwert zuzüglich dem Kompensationssignal. Insbesondere bildet die Rückrechnung 50a die als elektrische Spannung ausgedrückten Signalanteile der Harmonikregelung 18a und der Stabilisierungsregelung 20a auf einen elektrischen Strom ab. Die Rückrechnung 50a verwendet insbesondere ein Modell der Leistungselektronik 42a, um den von der Rückrechnung 50a ausgegebenen Strom zu ermitteln. Der von der Basisregelung 24a erstellte Signalanteil wird vorzugsweise mit den Signalanteilen der Harmonikregelung 18a und der Stabilisierungsregelung 20a kombiniert, insbesondere aufaddiert, an die Leistungselektronik 42a übergeben.

In zumindest einem Verfahrensschritt des Verfahrens 10a wird zumindest ein Teil eines Beitrags der Stabilisierungsregelung 20a zu dem Stellsignal 14a mittels der Harmonikregelung 18a ermittelt. Vorzugsweise ermittelt die Regeleinheit 28a mittels des Harmonikreglers 46a und/oder mittels externer zusätzlicher Harmonikregler eine Ergänzung zu dem Kompensationssignal und speichert das Kompensationssignal zusammen mit der Ergänzung in dem Speicher der Regeleinheit 28a ab.

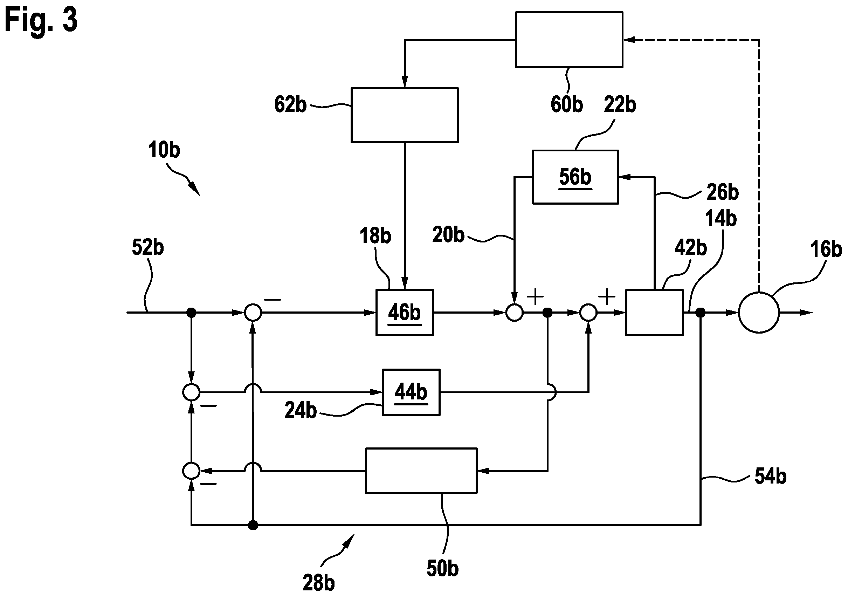

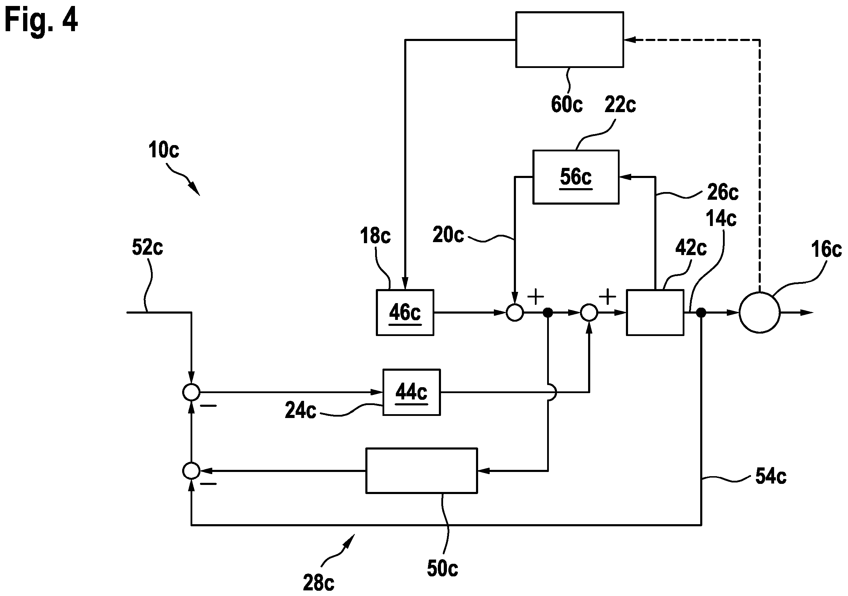

In den Figuren 4 bis 7sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 2, verwiesen werden kann. Zur Unterscheidung der Ausführungsbeispiele ist der Buchstabe a den Bezugszeichen des Ausführungsbeispiels in den Figuren 1 bis 2 nachgestellt. In den Ausführungsbeispielen der Figuren 3 bis 7 ist der Buchstabe a durch den Buchstaben b bis f ersetzt.

Figur 3 zeigt ein Blockdiagramm eines Verfahrens 10b zu einem geräuscharmen Betrieb einer Elektromotorvorrichtung, insbesondere eines Kompressors. In zumindest einem Verfahrensschritt wird ein von einer Regelgröße abhängiges Stellsignal 14b an einen Elektromotor 16b der Elektromotorvorrichtung übersandt. Das Stellsignal 14b wird in Abhängigkeit von einer Harmonikregelung 18b der Regelgröße und in Abhängigkeit von einer Stabilisierungsregelung 20b der Regelgröße erstellt.

In zumindest einem Erfassungsschritt 60b des Verfahrens 10b wird eine Schwingungsamplitude und/oder Schwingungsfrequenz der Elektromotorvorrichtung, insbesondere des Elektromotors 16b, erfasst. Insbesondere wird die Schwingungsamplitude und/oder die Schwingungsfrequenz von Vibrationen und/oder Geräuschen der Motorvorrichtung erfasst. Beispielsweise umfasst die Elektromotorvorrichtung einen MEMS-Sensor, ein Mikrophon oder einen anderen NVH-Sensor zur Erfassung der Schwingungsamplitude und/oder Schwingungsfrequenz. Das Verfahren 10b umfasst vorzugsweise einen Harmonikvorverarbeitungsschritt 62b. In dem Harmonikvorverarbeitungsschritt 62b ermittelt eine Regeleinheit 28b vorzugsweise einen Harmonikvorsteuerwert, insbesondere einen harmonischen Sollstromverlauf oder einen harmonischen Sollstromripple, in Abhängigkeit von der erfassten Schwingungsamplitude und/oder Schwingungsfrequenz. Ein Harmonikregler 46b der Regeleinheit 28b verarbeitet vorzugsweise den, insbesondere konstanten, Harmonikvorsteuerwert und einen Stromistwert 54b, insbesondere eine Regeldifferenz zwischen dem Stromistwert 54b und einem vorgegebenen Strom-Sollwert 52b, um ein Spannungssignal zu ermitteln. Das erfasste Schwingungssignal wird insbesondere in einer Kaskadenregelungsstruktur zunächst in Sollstromoberwellen überführt und anschließend mit dem Harmonikregler 46b eingeregelt.

Bezüglich weiterer Merkmale des Verfahrens 10b sei auf die Figur 2 und deren Beschreibung verwiesen.

Figur 4 zeigt ein Blockdiagramm eines Verfahrens 10c zu einem geräuscharmen Betrieb einer Elektromotorvorrichtung, insbesondere eines Kompressors. In zumindest einem Verfahrensschritt wird ein von einer Regelgröße abhängiges Stellsignal 14c an einen Elektromotor 16c der Elektromotorvorrichtung übersandt. Das Stellsignal 14c wird in Abhängigkeit von einer Harmonikregelung 18c der Regelgröße und in Abhängigkeit von einer Stabilisierungsregelung 20c der Regelgröße erstellt. In zumindest einem Erfassungsschritt 60c des Verfahrens 10c wird eine Schwingungsamplitude und/oder Schwingungsfrequenz der Elektromotorvorrichtung, insbesondere des Elektromotors 16c, erfasst. Ein Harmonikregler 46c der Regeleinheit 28c ermittelt vorzugsweise einen elektrischen Spannungswert in Abhängigkeit von der erfassten Schwingungsamplitude und/oder Schwingungsfrequenz, insbesondere ohne Abgleich mit einem Stromistwert 54c und/oder Strom-Sollwert 52c.

Bezüglich weiterer Merkmale des Verfahrens 10c sei auf die Figuren 2 und 3 sowie deren Beschreibung verwiesen.

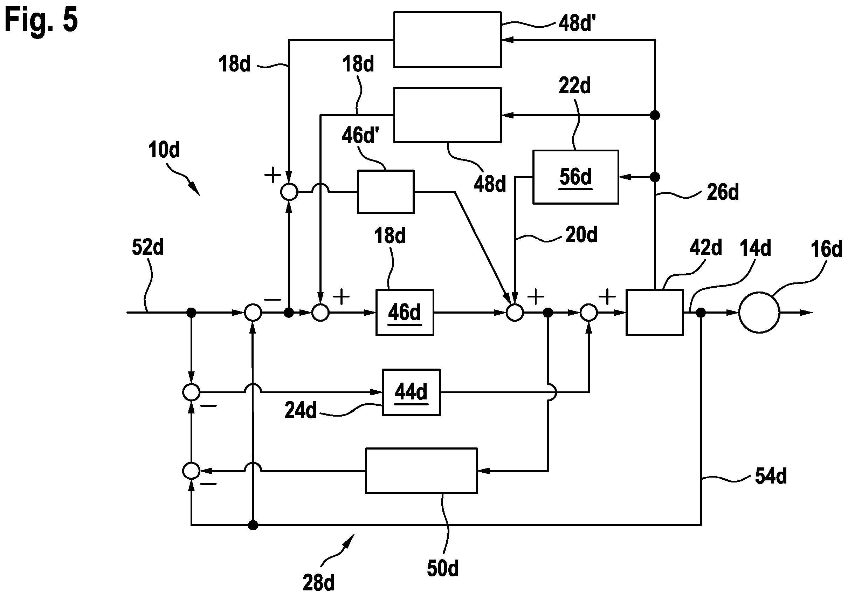

Figur 5 zeigt ein Blockdiagramm eines Verfahrens 10d zu einem geräuscharmen Betrieb einer Elektromotorvorrichtung, insbesondere eines Kompressors. In zumindest einem Verfahrensschritt wird ein von einer Regelgröße abhängiges Stellsignal 14d an einen Elektromotor 16d der Elektromotorvorrichtung übersandt. Das Stellsignal 14d wird in Abhängigkeit von einer Harmonikregelung 18d der Regelgröße und in Abhängigkeit von einer Stabilisierungsregelung 20d der Regelgröße erstellt. Eine Regeleinheit 28d umfasst zumindest einen Harmonikregler 46d und zumindest einen weiteren Harmonikregler 46d', um unterschiedliche Schwingungen zu dämpfen oder zu verstärken. Die Harmonikregelung 18d umfasst vorzugsweise eine Harmonikvorsteuerung 48d, welche stromaufwärts des Harmonikreglers 46d angeordnet ist. Die Harmonikregelung 18d umfasst vorzugsweise eine weitere Harmonikvorsteuerung 48d', welche stromaufwärts des weiteren Harmonikreglers 46d' angeordnet ist. Der Harmonikregler 46d zusammen mit der Harmonikvorsteuerung 48d und der weitere Harmonikregler 46d' zusammen mit der Harmonikvorsteuerung 48d' sind signaltechnisch vorzugsweise parallel in die Regeleinheit 28d eingebunden.

Bezüglich weiterer Merkmale des Verfahrens 10d sei auf die Figuren 2 bis 4 sowie deren Beschreibung verwiesen.

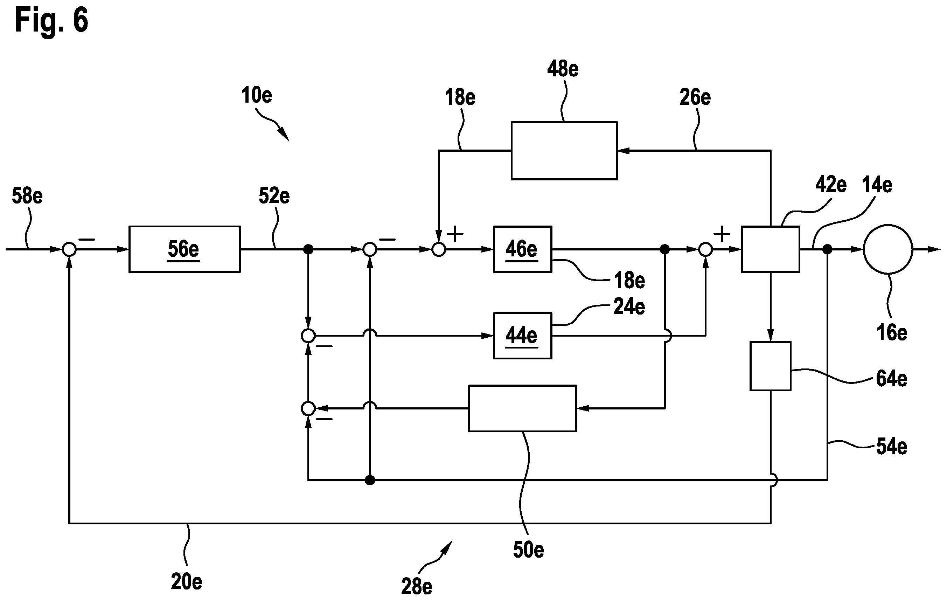

Figur 6 zeigt ein Blockdiagramm eines Verfahrens 10e zu einem geräuscharmen Betrieb einer Elektromotorvorrichtung, insbesondere eines Kompressors. In zumindest einem Verfahrensschritt wird ein von einer Regelgröße abhängiges Stellsignal 14e an einen Elektromotor 16e der Elektromotorvorrichtung übersandt. Das Stellsignal 14e wird in Abhängigkeit von einer Harmonikregelung 18e der Regelgröße und in Abhängigkeit von einer Stabilisierungsregelung 20e der Regelgröße erstellt. Ein Beitrag der Stabilisierungsregelung 20e zu dem Stellsignal 14e ist abhängig von einem Istwert des Stellsignals 14e. Eine Regeleinheit 28e der Elektromotorvorrichtung umfasst vorzugsweise zumindest ein Stabilisierungsregelglied 56e zu einer Ermittlung eines Signalanteils der Stabilisierungsregelung 20e an dem Stellsignal 14e. Das Stabilisierungsregelglied 56e verarbeitet vorzugsweise eine Regeldifferenz aus einem Drehzahl-Sollwert 58e des Elektromotors 16e, der insbesondere durch einen Sollwert eines Betriebspunkts vorgegeben ist, und einem Drehzahl-Istwert des Elektromotors 16e. Die Regeleinheit 28e ermittelt den Drehzahl-Istwert vorzugsweise mittels einer Leistungselektronik 42e der Elektromotorvorrichtung anhand eines Strom-Istwerts 54e und/oder der damit verbunden elektrischen Spannung. Die Harmonikregelung 18e und die Stabilisierungsregelung 20e sind vorzugsweise im Frequenzbereich getrennt ausgebildet. Vorzugsweise umfasst die Regeleinheit 28e einen Tiefpass 64e, welcher den Drehzahl-Istwert vor einer Bildung einer Regeldifferenz mit dem Drehzahl-Sollwert 58e filtert. Eine Harmonikvorsteuerung 48e der Harmoniksteuerung 18e ist vorzugsweise dazu vorgesehen, zumindest eine Frequenz, insbesondere ausschließlich Frequenzen, zu kompensieren, welche von dem Tiefpass 64e blockiert wird/werden. Das Stabilisierungsregelglied 56e gibt vorzugsweise einen Strom-Sollwert 52e aus. Die Harmonikregelung 18e und eine Basisregelung 24e des Verfahrens 10e sind vorzugsweise stromabwärts der Stabilisierungsregelung 20e angeordnet. Vorzugsweise verarbeiten die Harmonikregelung 18e und die Basisregelung 24e den von der Stabilisierungsregelung 56e ausgegebenen Strom-Sollwert 52e.

Bezüglich weiterer Merkmale des Verfahrens 10e sei auf die Figuren 2 bis 5 und deren Beschreibung verwiesen.

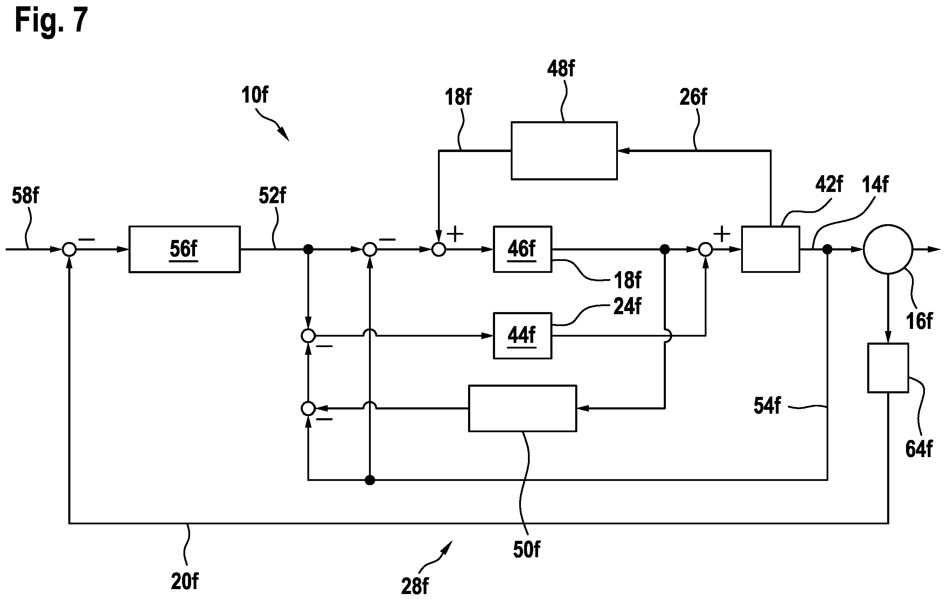

Figur 7 zeigt ein Blockdiagramm eines Verfahrens 10f zu einem geräuscharmen Betrieb einer Elektromotorvorrichtung, insbesondere eines Kompressors. In zumindest einem Verfahrensschritt wird ein von einer Regelgröße abhängiges Stellsignal 14f an einen Elektromotor 16f der Elektromotorvorrichtung übersandt. Das Stellsignal 14f wird in Abhängigkeit von einer Harmonikregelung 18f der Regelgröße und in Abhängigkeit von einer Stabilisierungsregelung 20f der Regelgröße erstellt. Ein Stabilisierungsregelglied 56f einer Regeleinheit 28f verarbeitet vorzugsweise eine Regeldifferenz aus einem Drehzahl-Sollwert 58f des Elektromotors 16f, der insbesondere durch einen Sollwert eines Betriebspunkts vorgegeben ist, und einem Drehzahl-Istwert des Elektromotors 16f. Die Regeleinheit 28f ermittelt den Drehzahl-Istwert vorzugsweise mittels eines physischen Drehzahlsensors, beispielsweise einen Encoder, einen Hallsensor oder dergleichen.

Bezüglich weiterer Merkmale des Verfahrens 10f sei auf die Figuren 2 bis 5 und im Besonderen auf die Figur 6 und deren Beschreibung verwiesen.

## Patentansprüche

1. Verfahren zu einem geräuscharmen Betrieb einer Elektromotorvorrichtung, insbesondere eines Kompressors, wobei in zumindest einem Verfahrensschritt ein von einer Regelgröße abhängiges Stellsignal (14a; 14b; 14c; 14d; 14e; 14f) an einen Elektromotor (16a; 16b; 16c; 16d; 16e; 16f) der Elektromotorvorrichtung übersandt wird, **dadurch gekennzeichnet, dass** das Stellsignal (14a; 14b; 14c; 14d; 14e; 14f) in Abhängigkeit von einer Harmonikregelung (18a; 18b; 18c; 18d; 18e; 18f) der Regelgröße und in Abhängigkeit von einer Stabilisierungsregelung (20a; 20b; 20c; 20d; 20e; 20f) der Regelgröße erstellt wird, wobei die Harmonikregelung (18a; 18b; 18c; 18d; 18e; 18f) dazu vorgesehen ist, zumindest einer Schwingung des Elektromotors (16a; 16b; 16c; 16d; 16e; 16f) bei einer festgelegten Frequenz, insbesondere einer Oberschwingung einer Frequenz, welche der Drehzahl des Betriebspunkts entspricht, entgegenzuwirken oder diese Schwingung zu verstärken, wobei die Stabilisierungsregelung (20a; 20b; 20c; 20d; 20e; 20f) dazu vorgesehen ist, Schwankungen der Regelgröße zu verringern, die durch eine sich verändernde Last verursacht werden, und wobei die Stabilisierungsregelung (20a; 20b; 20c; 20d; 20e; 20f) eine betriebspunktabhängige Vorsteuerung (22a; 22b; 22c; 22d; 20e; 20f) umfasst, in Abhängigkeit derer das Stellsignal (14a; 14b; 14c; 14d; 20e; 20f) erstellt wird.

2. Verfahren nach Anspruch 1, **dadurch gekennzeichnet, dass** ein Beitrag der Stabilisierungsregelung (20e; 20f) zu dem Stellsignal (14e; 14f) abhängig von einem Istwert des Stellsignals (14e; 14f) ist.

3. Verfahren nach einem der vorhergehenden Ansprüche, **dadurch gekennzeichnet, dass** die Harmonikregelung (18a; 18b; 18d; 18e; 18f) und die Stabilisierungsregelung (20a; 20b: 20d; 20e; 20f) stromaufwärts einer Basisregelung (24a; 24b; 24d; 24e; 24f) zu einem Einstellen eines Betriebspunkts der Regelgröße durchgeführt werden.

4. Verfahren nach einem der vorhergehenden Ansprüche, **dadurch gekennzeichnet, dass** in zumindest einem Verfahrensschritt zumindest ein Teil eines Beitrags der Stabilisierungsregelung (20a; 20b; 20c; 20d) zu dem Stellsignal (14a; 14b; 14c; 14d) mittels der Harmonikregelung (18a; 18b; 18c; 18d) ermittelt wird.

5. Verfahren nach einem der vorhergehenden Ansprüche, **dadurch gekennzeichnet, dass** die Harmonikregelung (18a; 18b; 18c; 18d; 18e; 18f) in zumindest einem Verfahrensschritt eine Schwingungsamplitude zumindest einer von der Regelgröße abhängigen Schwingungsfrequenz der Elektromotorvorrichtung anhebt.

6. Verfahren nach einem der vorhergehenden Ansprüche, **dadurch gekennzeichnet, dass** in zumindest einem Verfahrensschritt eine Schwingungsamplitude und/oder Schwingungsfrequenz der Elektromotorvorrichtung erfasst wird.

7. Elektromotorvorrichtung, insbesondere Kompressor, mit zumindest einem Elektromotor (16a; 16b; 16c; 16d; 16e; 16f) und mit zumindest einer Regeleinheit (28a; 28b; 28c; 28d; 28e; 28f) eingerichtet zu einer Durchführung eines Verfahrens nach einem der vorhergehenden Ansprüche.

8. Kraftwärmemaschine, insbesondere Wärmepumpenheizung, mit zumindest einem Kältemittelkreislauf (32a) und mit zumindest einer in den Kältemittelkreislauf (32a) eingebundenen Elektromotorvorrichtung, insbesondere einem Kompressor, nach Anspruch 7.

## Claims

1. Method for low-noise operation of an electric motor device, in particular of a compressor, wherein, in at least one method step, an actuating signal (14a; 14b; 14c; 14d; 14e; 14f) dependent on a control variable is sent to an electric motor (16a; 16b; 16c; 16d; 16e; 16f) of the electric motor device, **characterized in that** the actuating signal (14a; 14b; 14c; 14d; 14e; 14f) is created depending on harmonic control (18a; 18b; 18c; 18d; 18e; 18f) of the control variable and depending on stabilization control (20a; 20b; 20c; 20d; 20e; 20f) of the control variable, wherein the harmonic control (18a; 18b; 18c; 18d; 18e; 18f) is provided for counteracting at least one oscillation of the electric motor (16a; 16b; 16c; 16d; 16e; 16f) at a defined frequency, in particular a harmonic of a frequency, which corresponds to the rotation speed of the operating point, or for amplifying this oscillation, wherein the stabilization control (20a; 20b; 20c; 20d; 20e; 20f) is provided for reducing fluctuations in the control variable that are caused by a changing load, and wherein the stabilization control (20a; 20b; 20c; 20d; 20e; 20f) comprises operating point-dependent feed-forward control (22a; 22b; 22c; 22d; 20e; 20f), depending on which the actuating signal (14a; 14b; 14c; 14d; 20e; 20f) is created.

2. Method according to Claim 1, **characterized in that** a contribution of the stabilization control (20e; 20f) to the actuating signal (14e; 14f) is dependent on an actual value of the actuating signal (14e; 14f).

3. Method according to either of the preceding claims, **characterized in that** the harmonic control (18a; 18b; 18d; 18e; 18f) and the stabilization control (20a; 20b; 20d; 20e; 20f) are carried out upstream of basic control (24a; 24b; 24d; 24e; 24f) for setting an operating point of the control variable.

4. Method according to any of the preceding claims, **characterized in that**, in at least one method step, at least part of a contribution of the stabilization control (20a; 20b; 20c; 20d) to the actuating signal (14a; 14b; 14c; 14d) is determined by means of the harmonic control (18a; 18b; 18c; 18d).

5. Method according to any of the preceding claims, **characterized in that** the harmonic control (18a; 18b; 18c; 18d; 18e; 18f), in at least one method step, raises an oscillation amplitude of at least one oscillation frequency of the electric motor device that is dependent on the control variable.

6. Method according to any of the preceding claims, **characterized in that** an oscillation amplitude and/or oscillation frequency of the electric motor device is detected in at least one method step.

7. Electric motor device, in particular compressor, having at least one electric motor (16a; 16b; 16c; 16d; 16e; 16f) and having at least one control unit (28a; 28b; 28c; 28d; 28e; 28f) configured to carry out a method according to any of the preceding claims.

8. Heat engine, in particular heat pump heater, having at least one refrigerant circuit (32a) and having at least one electric motor device integrated into the refrigerant circuit (32a), in particular a compressor, according to Claim 7.

## Revendications

1. Procédé de fonctionnement silencieux d'un dispositif à moteur électrique, en particulier d'un compresseur, dans lequel, lors d'au moins une étape du procédé, un signal de réglage (14a ; 14b ; 14c ; 14d ; 14e ; 14f) dépendant d'une grandeur régulée est transmis à un moteur électrique (16a ; 16b ; 16c ; 16d ; 16e ; 16f) du dispositif à moteur électrique, **caractérisé en ce que** le signal de réglage (14a ; 14b ; 14c ; 14d ; 14e ; 14f) est généré en fonction d'une régulation d'harmoniques (18a ; 18b ; 18c ; 18d ; 18e ; 18f) de la grandeur régulée et en fonction d'une régulation de stabilisation (20a ; 20b ; 20c ; 20d ; 20e ; 20f) de la grandeur régulée, la régulation d'harmoniques (18a ; 18b ; 18c ; 18d ; 18e ; 18f) étant prévue pour s'opposer à au moins une oscillation du moteur électrique (16a ; 16b ; 16c ; 16d ; 16e ; 16f) à une fréquence fixée, en particulier un harmonique d'une fréquence qui correspond à la vitesse de rotation du point de fonctionnement, ou pour amplifier ladite oscillation, la régulation de stabilisation (20a ; 20b ; 20c ; 20d ; 20e ; 20f) étant prévue pour réduire des fluctuations de la grandeur régulée qui sont provoquées par une charge variable, et la régulation de stabilisation (20a ; 20b ; 20c ; 20d ; 20e ; 20f) comprenant une commande prédictive dépendant du point de fonctionnement (22a ; 22b ; 22c ; 22d ; 20e ; 20f), en fonction de laquelle le signal de réglage (14a ; 14b ; 14c ; 14d ; 20e ; 20f) est généré.

2. Procédé selon la revendication 1, **caractérisé en ce qu'**une contribution de la régulation de stabilisation (20e ; 20f) au signal de réglage (14e ; 14f) dépend d'une valeur réelle du signal de réglage (14e ; 14f).

3. Procédé selon l'une quelconque des revendications précédentes, **caractérisé en ce que** la régulation d'harmoniques (18a ; 18b ; 18d ; 18e ; 18f) et la régulation de stabilisation (20a ; 20b ; 20d ; 20e ; 20f) sont effectuées en amont d'une régulation de base (24a ; 24b ; 24d ; 24e ; 24f) destinée au réglage d'un point de fonctionnement de la grandeur régulée.

4. Procédé selon l'une quelconque des revendications précédentes, **caractérisé en ce que**, lors d'au moins une étape du procédé, au moins une partie d'une contribution de la régulation de stabilisation (20a ; 20b ; 20c ; 20d) au signal de réglage (14a ; 14b ; 14c ; 14d) est déterminée au moyen de la régulation d'harmoniques (18a ; 18b ; 18c ; 18d).

5. Procédé selon l'une quelconque des revendications précédentes, **caractérisé en ce que** la régulation d'harmoniques (18a ; 18b ; 18c ; 18d ; 18e ; 18f), lors d'au moins une étape du procédé, augmente une amplitude d'oscillation d'au moins une fréquence d'oscillation, qui dépend de la grandeur régulée, du dispositif à moteur électrique.

6. Procédé selon l'une quelconque des revendications précédentes, **caractérisé en ce que**, lors d'au moins une étape du procédé, une amplitude d'oscillation et/ou une fréquence d'oscillation du dispositif à moteur électrique est détectée.

7. Dispositif à moteur électrique, en particulier compresseur, comportant au moins un moteur électrique (16a ; 16b ; 16c ; 16d ; 16e ; 16f) et comportant au moins une unité de régulation (28a ; 28b ; 28c ; 28d ; 28e ; 28f) conçue pour la mise en œuvre d'un procédé selon l'une quelconque des revendications précédentes.

8. Machine thermique motrice, en particulier chauffage par pompe à chaleur, comportant au moins un circuit de fluide frigorigène (32a) et comportant au moins un dispositif à moteur électrique, en particulier un compresseur, selon la revendication 7, intégré au circuit de fluide frigorigène (32a).
